# EUROPEAN PATENT APPLICATION

(11) **EP 1 972 666 A1**
(43) Date of publication of application: **24.09.2008**
(21) Application number: 06834201.3
(22) Date of filing: 07.12.2006
(51) Int. Cl.: C09D 11/00, B41J 2/01, B41M 5/00

(54) **INK AND METHOD OF FORMING IMAGE THEREWITH**

(30) Priority: 11.01.2006 JP 2006003411
(71) Applicant: Konica Minolta Medical & Graphic, Inc., Hino-shi, Tokyo 191-8511 (JP)
(72) Inventor: MASUMI, Satoshi, Tokyo 191-8511 (JP)
(74) Representative: McCluskie, Gail Wilson
(86) International application number: PCT/JP2006/324446
(87) International publication number: WO 2007/080725

(57) **Abstract**

An ink comprising: (i) a radiation curable compound; and (ii) a solvent having a flash point of not lower than 70 °C in an amount of 20 weight% based on the total weight of the ink.

## Description

### FIELD OF THE INVENTION

The present invention relates to new ink and an image forming method utilizing the same.

### BACKGROUND

In recent years, an ink-jet recording method has been applied in variety of fields such as photography, various types of printing, marking and special printing of such as a color filter, because of capability of forming an image simply at a low cost. In particular, it is also possible to obtain image quality comparative to silver salt photography by utilizing a recording apparatus, which ejects and controls micro dots, and an exclusive paper, in which a coloring capability of a colorant and surface glossiness have been significantly improved. Image quality improvement of today has been achieved only by a combination of all the staffs of a recording material, ink and exclusive paper.

However, an ink-jet system which requires exclusive paper has problems of limitation of a recording medium and cost up of a recording medium. Therefore, many attempts have been made to perform recording on a medium, on which image is transferred, different from exclusive paper by an ink-jet method. Specifically, a phase transition ink-jet method which utilizes wax ink being solid at room temperature, a solvent type ink-jet method which utilizes ink primarily comprising a rapid-drying organic solvent, and an actinic ray curable ink-jet method in which an ink image is cross-linked by irradiation of active energy rays (radiation) such as ultraviolet rays (UV light) after recording.

Among them, an ultraviolet curing type ink-jet method has been noted with respect to relatively low smell compared to a solvent type ink-jet method, rapid-drying and capability of recording on a recording medium without ink absorptive capability, and various ultraviolet curable ink-jet inks corresponding thereto have been disclosed.

In this manner, in actinic ray curable ink-jet ink, wide range of selection of utilizable recording medium is possible, and particularly some of the ink has printing adaptability against a recording medium such as plastic and metal which have little ink absorptive capability. However, actinic ray curable ink-jet ink has a problem of building up of the printed portion due to having no volatile components when printing is performed on a recording medium having no absorptive property. In particular, in applications for gravure printing and an ink-jet recording method, in which ink viscosity is low, a pigment concentration is limited to prepare ink being stable at a low viscosity, resulting in that an ink quantity required to achieve the same density increases, and that building up of the printed portion becomes not negligible.

In view of the above problems, disclosed has been a ultraviolet curable ink composition for ink-jet recording, in which a colorant, a ultraviolet curable composition, a photopolymerization initiator and an organic solvent capable of dissolving the ultraviolet curable composition are contained, a boiling point of the organic solvent is set in a predetermined range, as well as a weight ratio of the ultraviolet curable composition to the organic solvent and a content of the ultraviolet curable composition are defined to be not less than a predetermined value, respectively (for example, refer to patent document 1), however, ejection stability was not sufficient. Further, disclosed has been a oil-based pigment ink composition, in which pigment, a polymer compound and an organic solvent are contained, a (poly)alkylene glycol derivative and a nitrogen-containing heterocyclic compound are added at a specific amount as an organic solvent, as well as a flash point of the whole ink composition is not lower than 63 °C (for example, refer to patent document 2), however, there were no descriptions or references on actinic ray curable ink-jet ink.
[Patent Document 1] Unexamined Japanese Patent Application Publication No. (hereinafter, referred to as JP-A) 2002-241654
[Patent Document 2] JP-A 2005-23298

### SUMMARY OF THE INVENTION

### PROBLEMS TO BE DISSOLVED BY THE INVENTION

This invention has been made in view of the above-described problems, and an object of this invention is to provide ink, which can form a high quality image on various recording media, and an image forming method utilizing the same.

### MEANS TO SOLVE THE PROBLEMS

The above-described object can be achieved by the following constitutions.
Item 1. An ink comprising:
   (i) a radiation curable compound; and
   (ii) a solvent having a flash point of not lower than 70 °C in an amount of 20 weight% based on the total weight of the ink.
Item 2. The ink described in Item 1 above, wherein the solvent having a flash point of not lower than 70 °C has a boiling point of not lower than 180 °C.
Item 3. The ink described in Item 1 or 2 above, wherein the solvent having a flash point of not lower than 70 °C has a boiling point of not higher than 250 °C.
Item 4. The ink described in any one of above-described Items 1 - 3, wherein a photopolymerization initiator is incorporated in the ink.
Item 5. The ink described in any one of above-described Items 1 - 4, wherein a content of the solvent having a flash point of not lower than 70 °C is not less than 50 weight% and not more than 90 weight% based on the total weight of the ink.
Item 6. The ink described in any one of above-described Items 1 - 5, wherein the radiation curable compound contains an oligomer or a prepolymer.
Item 7. The ink described in Item 6 above, wherein a ratio of oligomer or prepolymer in the radiation curable compound is not less than 30 weight% based on the total weight of the ink.
Item 8. The ink described in any one of above-mentioned Items 1 - 7, wherein a colorant is incorporated in the ink.
Item 9. A method for image forming of ink-jet recording comprising the step of:
   (a) ejecting the ink described in any one of above-mentioned Items 1 - 8 onto a recording medium,
   wherein the minimum liquid drop size at the time of ejection of the ink is not less than 1 pl and not more than 10 pl per 1 dot.
Item 10. The method for image forming of ink-jet recording comprising the step of:
   (a) ejecting the ink described in any one of above-mentioned Items 1 - 8 onto a recording medium,
   wherein a temperature control means of the recording medium, having been ink-jet recorded, is provided after printing.
Item 11. The method for image forming described in Item 9 or 10 above, wherein the recording medium does not substantially exhibit absorption capability of the ink.

### EFFECTS OF THE INVENTION

This invention has been able to provide ink which can form a high quality image against variety of recording media and an image forming method utilizing the same.

### BRIEF DESCRIPTION OF THE DRAWINGS

Fig. 1 is a front view drawing to show an example of a primary constitution of an ink-jet recording apparatus of this invention.
Fig. 2 is an over view drawing to show another example of a primary constitution of an ink-jet recording apparatus of this invention.

### EXPLANATION OF NUMBERS

- 1: Recording apparatus
- 2: Head carriage
- 3: Recording head
- 31: Ink ejection outlet
- 4: Irradiation means
- 5: Platen portion
- 6: Guide member
- 7: Bellows structure
- 8: Irradiation light source
- P: Recording medium

### DETAILED DESCRIPTION OF THE INVENTION

In the following, the most preferable embodiment to practice this invention will be detailed.

The inventor of this invention, as a result of extensive studies in view of the above-described problems, has found that a high quality image can be formed on variety of recording media by utilizing ink characterized by containing at least a radiation curable compound and not less than 20 weight% a solvent having a flash point of not lower than 70 °C, resulting in achievement of this invention.

In the following, each constituent element of this invention will be detailed.

Ink of this invention is characterized by containing not less than 20 weight% of a solvent having a flash point of not lower than 70 °C in combination with a radiation curable compound.

Generally, actinic ray curable oil type ink containing a radiation curable compound is capable of printing and image formation on variety of recording media in addition to a recording medium without having ink absorptive capability, however, an image may build up at the maximum density portion of the secondary color comprising at least two types of ink due to a high ratio of a radiation curable compound resulting in making the image to show uncomfortable quality.

Against the above-described problem, as described in the aforesaid patent document 1, an attempt to depress image build up by replacing a certain amount of a radiation curable composition by a volatile organic solvent, however, in addition to poor safety of ink, a volatile organic solvent may easily evaporate at the nozzle portion of an ink-jet recording head at the time of printing when a selected volatile organic solvent has a too low flash point or a too low boiling point, resulting in difficulty in maintaining ejection stability.

The inventor of this invention, as a result of extensive studies to solve the above-described problem, has been able to prepare an image having a sufficient cured degree and to reduce ink build up feeling (roughness feeling) at the high density image portion as well as to stably form an image on variety of recording media without deteriorating ejection stability due to evaporation of a solvent at the nozzle portion even in continuous ejection, by containing not less than 20 weight% of a solvent having a flash point of not lower than 70 °C.

Further, in ink of this invention, it is preferable that a solvent according to this invention, having a flash point of not lower than 70 °C, is provided with a boiling point of not lower than 180 °C and not higher than 250 °C and the content is set to not less than 50 weight% and not more than 90 weight%, with respect to more effectively achieving the object of this invention. Further, it is preferable that a radiation curable compound according to this invention contains oligomer or prepolymer, the content of which is not less than 30 weight%.

Further, in ink of this invention, a photopolymerization initiator and a colorant, in addition to radiation curable compound and a solvent having a flash point of not lower than 70 °C, are preferably incorporated as compounds to constitute ink.

### [Solvent Having Flash Point of Not Lower Than 70 °C]

A solvent having a flash point of not lower than 70 °C according to this invention is not specifically limited and includes such as 1,4-butanediol, 2-ethyl-l-hexanol, butyl lactate, diethylene glycol monobutyl ether, ethylene glycol, diethylene glycol, triethylene glycol, propylene glycol, diethylene glycol monomethyl ether, triethylene glycol monoethyl ether, diethylene glycol monobutyl ether acetate, diethylene glycol monoethyl ether acetate, γ-butyrolactone, 3-methyl-3-methoxybutyl acetate, 3,5,5-trimethyl-2-cyclohexene-1-one, 3-methyl-3-methoxybutanol, dipropylene glycol, dipropylene glycol monomethyl ether, diethylene glycol diethyl ether, triethylene glycol monomethyl ether, triethylene glycol dimethyl ether and tetraethylene glycol dimethyl ether.

In the following, a boiling point and a flash point of typical compounds of a solvent, having a flash point of not lower than 70 °C, according to this invention will be shown.

**Table 1**

| Compound | Chemical structure | Flash point (°C) | Boiling point (°C) |
|---|---|---|---|
| 1,4 butanediol | HOCH₂CH₂CH₂CH₂OH | 138 | 228 |
| 2-ethyl-1-hexanol | HOCH₂CH(C₂H₅)CH₂CH₂CH₂CH₃ | 78 | 184.7 |
| 3-methyl-3-methoxy butanol | H₃CC(OCH₃)(CH₃)CH₂CH₂CH₂OH | 72 | 174 |
| Butyl lactate | H₃CCH (OH) COOCC₄H₉ | 91 | 188 |
| Ethylene glycol | HOCH₂CH₂OH | 111 | 197.2 |
| Propylene glycol | H₃CCH(OH)CH₂OH | 99 | 187.4 |
| Diethylene glycol | HOCH₂CH₂OCH₂CH₂OH | 152 | 244.3 |
| Triethylene glycol | HOCH₂CH₂OCH₂CH₂OCH₂CH₂OH | 177 | 287.4 |
| Diethylene glycol monomethyl ether | HOCH₂CH₂OCH₂CH₂OCH₃ | 93 | 194 |
| Diethylene glycol monobutyl ether | HOCH₂CH₂OCH₂CH₂OC₄H₉ | 120 | 230.6 |
| Diethylene glycol diethylether | H₅C₂OCH₂CH₂OCH₂CH₂OC₂H₅ | 82 | 188 |
| Diethylene glycol, monobutyl ether acetate | H₂CCOOCH₂CH₂OCH₂CH₂OC₄H₉ | 124 | 246.8 |
| Diethylene glycol monoethyl ether acetate | H₂CCOOCH₂CH₂OCH₂CH₂OC₂H₅ | 106 | 217.4 |
| Dipropylene glycol | HOCH₂CH₂CH₂OCH₂CH₂CH₂OH | 138 | 233 |
| Dipropylene glycol monomethyl ether | H₃COCH₂CH₂CH₂OCH₂CH₂CH₂OH | 77 | 188 |
| Triethylene glycol monomethyl ether | HOCH₂CH₂OCH₂CH₂OCH₂CH₂OCH₃ | 134 | 249 |
| Triethylene glycol monoethyl ether | HOCH₂CH₂OCH₂CH₂OCH₂CH₂OC₂H₅ | 135 | 256 |
| Triethylene glycol dimethyl ether | H₃COCH₂CH₂OCH₂CH₂OCH₂CH₂OCH₃ | 108 | 216 |
| Tetraethylene glycol dimethyl ether | H₃COCH₂CH₂OCH₂CH₂OCH₂CH₂OCH₂CH₂OCH₃ | 140 | 275.3 |
| 3-methyl-3-methoxy butyl acetate | H₃CCOOCH₂CH₂C (CH₃) (OCH₃) CH₃ | 73 | 188 |

γ -butyrolactone 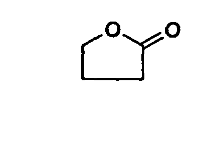 Flash point: 98.3°C
Boiling point: 203°C
3,5,5-trimethyl-2-cyclohexene-1-one 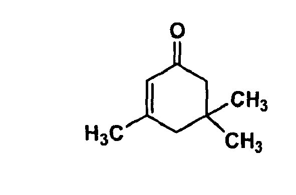 Flash point: 94°C
Boiling point: 215.3°C

A solvent having a flash point of not lower than 70 °C according to this invention has further more preferably a boiling point of not lower than 180 °C and not higher than 250 °C.

Further, ink of this invention may contain a solvent having a flash point of lower than 70 °C within a range of not disturbing an objective effect of this invention, however, the content of a solvent having a flash point of lower than 70 °C is preferably less than 10%, more preferably less than 5% and may not be contained at all.

In the following, examples of a solvent having a flash point of lower than 70 °C will be shown.

**Table 2**

| Compound | Chemical structure | Flash point (°C) | Boiling point (°C) |
|---|---|---|---|
| Butyl acetate | H₃CCOOC₄H₉ | 27 | 126 |
| Diacetone alcohol | (CH₃)₂C(OH)CH₂COCH₃ | 61 | 167.9 |
| Methoxybutyl acetate | H₃CCOOC₄H₈OCH₃ | 62.5 | 171 |
| Cellosolve acetate | H₃CCOOCH₂CH₂OC₂H₅ | 57 | 156.3 |
| Ethylene glycol monomethyl ether | H₃COCH₂CH₂OH | 39 | 124.5 |
| Diethylene glycol dimethyl ether | H₃COCH₂CH₂OCH₂CH₂OCH₃ | 58 | 162 |

Cyclohexane 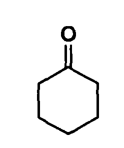 Flash point: 42.3°C
Boiling point: 155.6°C

### [Radiation Curable Compound]

In ink of this invention, a radiation curable compound is not specifically limited, however, preferably contains oligomer or prepolymer, and the content of the oligomer or prepolymer is preferably not less than 30 weight%. A radiation curable compound applicable to ink of this invention includes, for example, a radical polymerizing compound and a cation polymerizing compound.

### (Radical Polymerizing Compound)

As a cation polymerizing compound applicable to ink of this invention, any (meth)acrylate monomer and/or oligomer or prepolymer well known in the art can be utilized.

Listed are unifunctional monomers or prepolymers such as isoamyl acrylate, stearyl acrylate, lauryl acrylate, octyl acrylate, decyl acrylate, isomyristyl acrylate, isostearyl acrylate, 2-ethylhexyl diglycol acrylate, 2-hydroxybutyl acrylate, 2-acryloyloxy ethylhexahydrophthalate, butoxyethyl acrylate, ethoxydiethylene glycol acrylate, methoxydiethylene glycol acrylate, methoxypolyethylene glycol acrylate, methoxypropylene glycol acrylate, phenoxyethyl acrylate, tetrahydrofurufryl acrylate, isobornyl acrylate, 2-hydroxyethyl acrylate, 2-hydroxypropyl acrylate, 2-hydroxy-3-phenoxypropyl acrylate, 2-acryloyloxyethyl succinate, 2-acryloyloxyethyl phthalate, 2-acryloyloxyethyl-2-hydroxyethyl phthalate, lactone modified flexible acrylate and t-butylcyclohexyl acrylate; bifunctional monomers such as triethylene glycol diacrylate, tetraethylene glycol diacrylate, polythylene glycol diacrylate, tripropylene glycol diacrylate, polypropylene glycol diacrylate, 1,4-butanediol diacrylate, 1,6-hexanediol diacrylate, 1,9-nonanediol diacrylate, neopentyl glycol diacrylate, dimethylol-tricyclodecane diacrylate, EO adduct diacrylate of bisphenol A, PO adduct diacrylate of bisphenol A, hydroxypivalic neopentyl glycol diacrylate and polytetramethylene glycol diacrylate; and polyfunctional, at least trifunctional, monomer such as trimethylolpropane triacrylate, EO modified trimethylolpropane triacrylate, pentaerythritol triacrylate, pentaerythritol tetraacrylate, dipentaerythritol hexaacrylate, ditrimethylolpropane tetraacrylate, glycerinpropoxy triacrylate, caprolactone modified trimethylolpropane triacrylate, pentaerythritolethoxy tetraacrylate and caprolactam modified dipentaerythritol hexaacrylate.

Further, a radical radiation curable compound of this invention may contain at least one type of oligomer or prepolymer having a polymerizing unsaturated carbon-carbon bond. A reactive oligomer component is preferably provided with a functional property of at least one, and is comprised of a component having at least 2 unsaturated carbon-carbon bonds or a mixture of at least one type of said component. Further, the functional property of an oligomer component is preferably not less than 2. An equivalent weight of each oligomer is preferably at least 180, and more preferably at least 200 or 220. However, generally, increase of the equivalent weight accompanies increase of viscosity, resulting in limitation of the oligomer or prepolymer amount contained in a composition. Therefore, the equivalent weight is preferably not over 750 and more preferably not over 500.

Polyacrylate oligomer is preferred because of a relatively low viscosity thereof compared to other olygomer type poly-functional substances. Examples thereof include a poly-functional product prepared by acrylation of hydroxyl terminal polyester and a poly-functional product prepared by acrylation of urethane oligomer known as urethane acrylate, and epoxyacrylate.

The addition amount of an oligomer or a prepolymer component is preferably not less than 10% of a radiation curable compound, more preferably 20 - 70% and specifically preferably 30 - 60%.

### (Cation Polymerizing Compound)

In this invention, to improve curing capability and ejection stability, at least one type of a compound having an oxirane group as a radiation curable compound is preferably incorporated.

A radiation curable compound includes various types of cation polymerizing monomer well known in the art. Listed are such as epoxy compounds, vinyl ether compounds and oxetane compounds such as exemplified in JP-A Nos. 6-9714, 2001-31892, 2001-40068, 2001-55507, 2001-310938, 2001-310937 and 2001-220526.

An epoxy compound includes the following aromatic epoxide, alicyclic epoxide and aliphatic epoxide.

Preferable aromatic epoxide is di- or poly-glycidyl ether which is prepared by a reaction of polyhydric alcohol having at least one aromatic ring or an alkylene oxide adduct thereof, and epichlorohydrin, and includes such as di- or poly-glycidyl ether of bisphenol A or an alkylene oxide adduct thereof, di- or poly-glycidyl ether of hydrogenated bisphenol A or an alkylene oxide adduct thereof, and novolac type epoxy resin. Herein, alkylene oxide includes such as ethylene oxide and propylene oxide.

Alicyclic epoxide can be prepared by epoxidation of a compound having at least one cycloalkane ring such as a cyclopentene ring by use of a suitable oxidant such as hydrogen peroxide and peracid, and preferable is a compound containing cyclohexene oxide or cyclopentene oxide.

Preferable aliphatic epoxide includes such as di- or poly-glycidyl ether of aliphatic polyhydric alcohol or an alkylene oxide adduct thereof, and typical examples thereof include diglycidyl ether of alkylene glycol such as diglycidyl ether of ethylene glycol, diglycidyl ether of propylene glycol or diglycidyl ether of 1,6-hexanediol; and polyglycidyl ether of polyhydric alcohol such as di- or triglycidyl ether of glycerin or an alkylene oxide adduct thereof; and diglycidyl ether of polyalkylene glycol such as diglycidyl ether of polyethylene glycol or an alkylene oxide adduct thereof and diglycidyl ether of polypropylene glycol or an alkylene oxide adduct thereof. Herein, alkylene oxide includes such as ethylene oxide and propylene oxide.

Among these epoxides, aromatic epoxide and alicyclic epoxide are preferable in view of rapid curing capability, and alicyclic epoxide is specifically preferable. In this invention, one type of the above-described epoxiide may be utilized alone or at least two types may be utilized in appropriate combination.

Further, in this invention, an epoxy compound having an oxirane group is specifically preferably either one of epoxydated aliphatic ester or epoxydated aliphatic glyceride, with respect to safety of such as AMES and sensitization.

Epoxydated aliphatic ester and epoxydated aliphatic glyceride are utilized without specific limitation provided that they are aliphatic ester and aliphatic glyceride into which an epoxy group has been introduced.

As epoxydated aliphatic ester, utilized can be those prepared by epoxydation of oleic ester such as epoxy methyl stearate, epoxy butyl stearate and epoxy octyl stearate. Further, as epoxydated aliphatic glyceride, utilized can be those prepared by epoxydation of such as soybean oil, linseed oil and castor oil, such as epoxydated soybean oil, epoxydated linseed oil and epoxydated castor oil.

Further, in this invention, to further improve curing capability and ejection stability, it is preferable to incorporate 30 - 95 weight% of a compound having an oxetane ring, 5 - 70 weight% of a compound having a oxirane group, and 0 - 40 weight% of a vinyl ether compound, as a photo-polymerizing compound.

An oxetane compound utilizable in this invention includes any oxetane compound well known in the art such as described in JP-A 2001-220526 and JP-A 2001-310937.

A vinyl ether compound utilizable in this invention includes a di- or tri-vinyl ether compound such as ethylene glycol divinyl ether, diethylene glycol divinyl ether, triethylene glycol divinyl ether, propylene glycol divinyl ether, dipropylene glycol divinyl ether, butanediol divinyl ether, hexanediol divinyl ether, cyclohexane dimethanol divinyl ether, trimethyylolpropane trivinyl ether; and a monovinyl ether compound such as ethyl vinyl ether, n-butyl vinyl ether, isobutyl vinyl ether, octadecyl vinyl ether, cyclohexyl vinyl ether, hydroxybutyl vinyl ether, 2-ethylhexyl vinyl ether, cyclohexane dimethanol monovinyl ether, n-propyl vinyl ether, isopropyl vinyl ether, isopropenyl ethe-O-propylene carbonate, dodecyl vinyl ether, diethylene glycol monovinyl ether and octadecyl vinyl ether.

Among these vinyl ether compounds, a di- or tri-vinyl ether compound is preferable and di-vinyl ether is specifically preferable, with respect to curing capability, adhesion and surface hardness. In this invention, the above-described vinyl ether compound may be either utilized alone or in appropriate combination of at least two types.

### [Photopolymerization Initiator]

In ink of this invention, aphotopolymerization initiator is preferably incorporated together with a radiation polymerizing compound.

### (Photo-induced Acid Generator, Photo-induced Radical Generator)

In actinic ray curable ink of this invention, any photo-initiator well known in the art can be utilized. A photo-initiator includes a photo-induced acid generator and a photo-induced radical generator.

As a photo-induced acid generator, for example, a photo-amplification type photoresist and a compound applied for photo-cationic polymerization (refer to "Organic Materials for Imaging", edited by Study Group of Organic Electronics Material, Bunshin Publishing, pp. 187 - 192 (1993)) can be utilized. Examples of a suitable compound for this invention will be listed below.

Firstly, listed are B(C₆F₆)₄⁻, PF₆⁻, AsF₆⁻, SbF₆⁻ and CF₃SO₃⁻ salt of an aromatic onium compound such as diazonium, ammonium, iodonium, sulfonium and phosphonium.

In the following, specific examples of an onium compound utilizable in this invention will be shown.

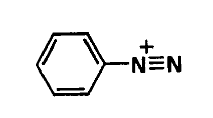

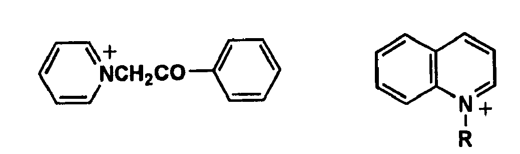

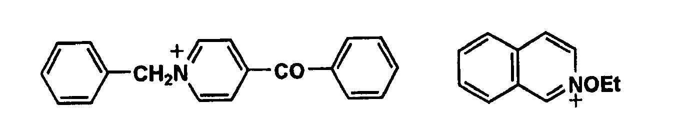

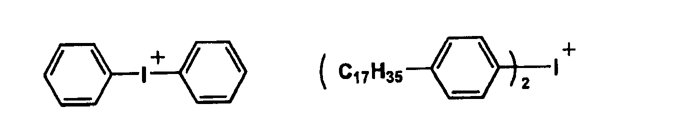

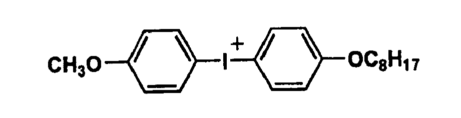

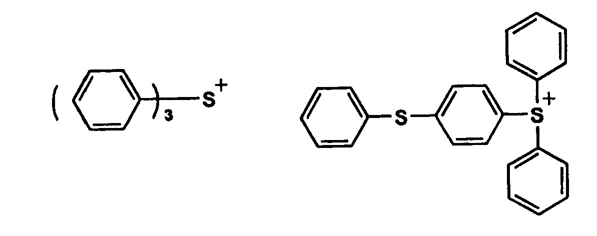

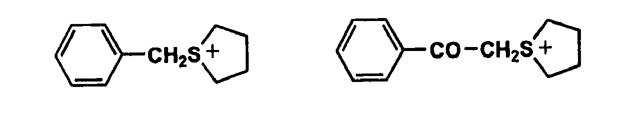

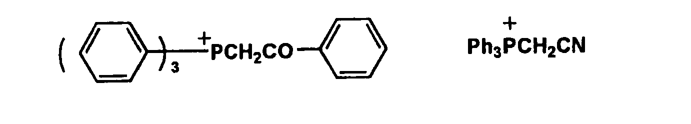

Secondly, listed is a sulfonate which generates sulfonic acid, and specific examples thereof will be exemplified below.

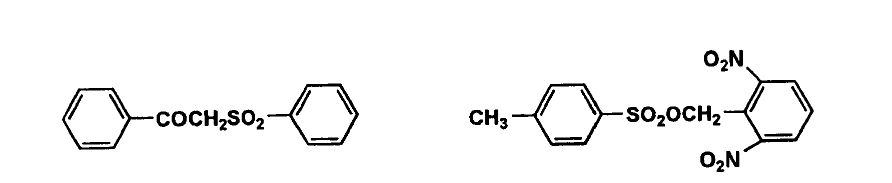

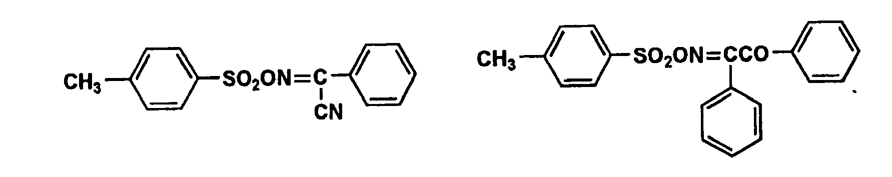

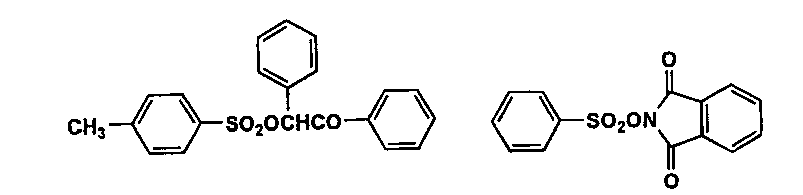

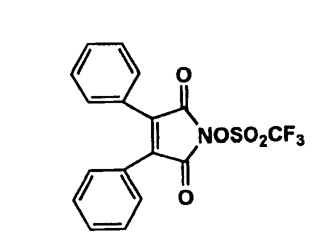

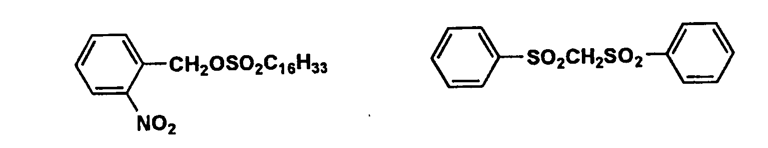

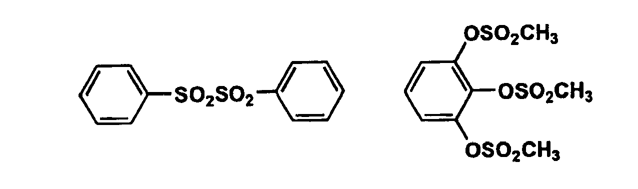

Thirdly, also listed is a halogen compound which generates hydrogen halogenide and specific examples thereof will be shown below.

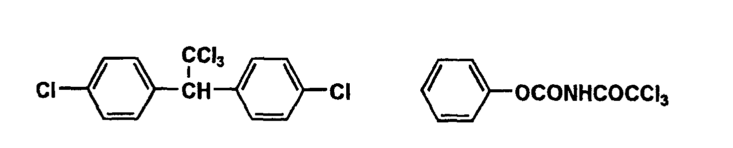

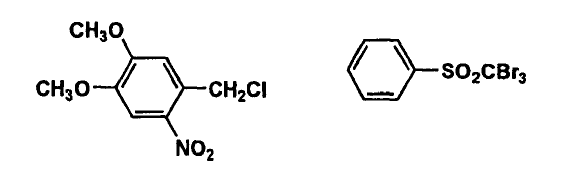

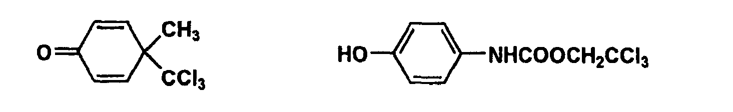

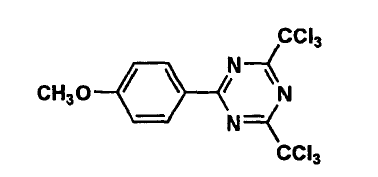

Fourthly, listed is an iron allene complex.

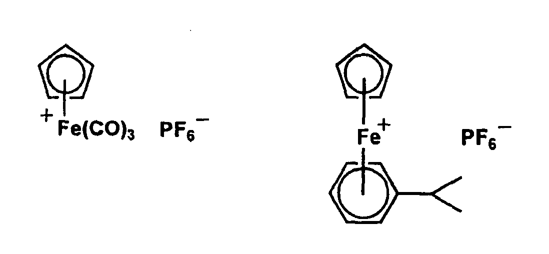

Further, a photo-induced radical generator utilizable in this invention includes photo-induced radical generators well known in the art such as aryl alkyl ketone, oxime ketone, S-phenyl thiobenzoate, titanocene, aromatic ketone, thioxanthone, benzyl and quinone derivatives and cumarines. These are detailed in "Applications and Market of UV·EB Curing Technology" (CMC Publishing, supervised by Yoneho Tabata/edited by Radtech Study Group). Among them, acylphosphine oxide and acylphosphonato are specifically effective for internal curing in an ink image having a thickness of 5 - 12 µm per one color such as in an ink-jet method because of high sensitivity and decrease of absorption by photo-cleavage of an initiator. Specifically, such as bis(2,4,6-trimethylbenzoyl)-phenylphosphine oxide and bis(2,6-dimethoxybenzoyl)-2,4,4-trimethyl-pentylphosphine oxide are preferable.

Further, in selection considering safety, preferably utilized are 1-hydroxy-cyclohexyl-phenyl-ketone, 2-methyl-1[4-(methylthio)phenyl]-2-morpholinopropane-1-one, bis(2,6-dimethoxybenzoyl)-2,4,4-trimethyl-pentylphophine oxide and 2-hydroxy-2-methyl-1-phenyl-propane-1-one (Dalocure (registered trademark) 1173). A preferable addition amount is 1 - 6 weight% and more preferably 2 - 5 weight%, of the total ink composition.

### (Photo-induced Cation Polymerization Initiator)

A photo-induced cation polymerization initiator applicable to ink of this invention includes aryl sufonium salt derivatives (for example, Silacure UVI-6990 and Silacure UVI-6974 manufactured by Union Carbide Corp.; and Adeka Optomer SP-150, Adeka Optomer SP-170 and Adeka Optomer SP-172, manufactured by Asahi Denka Kogyo K.K.), allyl iodonium salt derivatives (for example, RP-2074 manufactured by Rohdia Corp.) and alene-ion complex derivatives (for example, Irgacure 261 manufactured by Ciba Geigy Corp.), diazonium salt derivatives, triazine type initiators and other acid generators such as halogenide. A photo-induced cation polymerization initiator is preferably incorporated at a ratio of 0.2 - 20 weight parts against 100 weight parts of a compound having an alicyclic epoxy group. It is difficult to obtain a cured product when the content of a photo-induced cation polymerization initiator is less than 0.2 weight parts, while to incorporate over 20 weight parts shows no further effect of curing improvement. These photo-induced cation polymerization initiators may be utilized by selecting one or two types.

### [Colorant]

In ink of this invention, a colorant is preferably incorporated and a colorant is preferably pigment.

As pigment utilized in this invention, organic pigment having been subjected to a surface treatment to be made acid and/or basic is preferably utilized, and the content of a dispersant in ink is preferably 35 - 65% of the pigment weight. In ink of this invention, a dispersant may not be sufficiently adsorbed on the whole surface of pigment resulting in insufficient dispersion stability when the content of a dispersant is less than 35%, while a dispersant not adsorbed on the pigment surface may be isolated in ink to cause polymerization inhibition, which is problematic, when it is over 65%. An amine value of pigment is preferably not less than an acid value, and the difference is more preferably not less than 1 mg/gKOH and less than 10 mg/gKOH. The effect is not exhibited when it is less than 1 mg/gKOH, while it is not preferable to cause polymerization inhibition in addition to requirement of an excessive basic treatment resulting in cost up when it is over 10 mg/gKOH.

Pigment utilized in this invention includes carbon type pigment such as carbon black, carbon refined and carbon nanotube; metal oxide pigment such as iron black, cobalt blue, zinc oxide, titanium oxide, chromium oxide and iron oxide; sulfide pigment such as zinc sulfide; phthalocyanine type pigment, pigment comprising salt of such as sulfate, carbonate, silicate and phosphate of metal; inorganic pigment such as metal powder like aluminum powder, bronze powder and zinc powder; nitroso pigment such as nitro pigment, aniline black and naphthol green B; azo pigment such as Bordaue 10B, Lake Red 4R and Chromophthal Red (including azo lake, insoluble azo pigment, condensed azo pigment and chelate azo pigment); lake pignment such as Peacock Blue Lake and Rhodamine Lake; phthalocyanine pigment such as Phthalocyanine Blue; polycyclic type pigment (such as perylene pigment, perynone pigment, anthraquinone pigment, chinacridone pigment, dioxane pigment, thioindigo pigment, isoindolinone pigment and quinofuranone pigment); threne pigment such as Thioindigo Red and Indathrone Blue; and organic pigment such as quinacridone pigment, quinacridine pigment and isoindolinone pigment.

Specific example of pigment includes such as C. I. Pigment Yellow-1, 2, 3, 12, 13, 14, 16, 17, 42, 73, 74, 75, 81, 83, 87, 93, 95, 97, 98, 109, 114, 120, 128, 129, 138, 150, 151, 154, 180, 186; C. I. Pigment Orange-16, 36, 38; C. I. Pigment Red-5, 7, 22, 38, 48:1, 48:2, 48:4, 49:1, 53:1, 57:1, 63:1, 101, 112, 122, 123, 144, 146, 168, 184, 185, 202; C. I. Pigment Violet-19, 23, C. I. Pigment Blue-1, 2, 3, 15:1, 15:2, 15:3, 15: 4, 18, 22, 27, 29, 60; C. I. Pigment Green-7, 36; C. I. Pigment White-6, 18, 21; and C. I. Pigment Black-7.

For dispersion of the above-described pigment, utilized can be a ball mill, a sand mill, an atliter, a roll mill, an agitator, a Henschel mixer, a colloid mill, an ultrasonic homogenizer, a pearl mill, a wet type jet mill and a paint shaker. Further, at the time of dispersing pigment, a dispersant may be added. A dispersant includes Solsperse series by Avecia Corp. and PB series by Ajinomoto Fine Techno Corp. Further, as a dispersion aid, a synergist corresponding to various types of pigment may be utilized. These dispersant and dispersion aid are preferably incorporated at 1 - 50 weight parts against 100 parts of pigment. A solvent or a polymerization compound is utilized as a dispersion medium; however, it is preferable to utilize no solvent since reaction and curing are performed after printing of photo-curable ink of this invention. When a solvent remains in a cured image, there cause problems of deterioration of solvent resistance and VOC of residual solvent. Therefore, as a dispersion medium, it is preferable to utilize no solvent but a polymerization compound and more preferable to select monomer having the least viscosity among them, with respect to dispersion adaptability.

In pigment dispersion, selection of pigment, a dispersant and a dispersion medium, dispersion conditions and filtering conditions are suitably set so as to make a mean particle size of pigment particles of preferably 0.08 - 0.5 µm, and the maximum particle size of 0.3 - 10 µm and preferably of 0.3 - 3 µm. It is possible to restrain nozzle clogging as well as to maintain storage stability, transparency and curing sensitivity of ink by this particle size control. In ink of this invention, a concentration of a colorant is preferably 1 - 10 weight% of the whole ink.

### [Additives]

In ink of this invention, various additives other than the above described ones can be utilized. For example, incorporated can be a leveling additive; a matting agent; and polyester type resin, polyurethane type resin, vinyl type resin, acryl type resin, rubber type resin and waxes for adjustment of film physical properties. Any basic compound well known in the art can be utilized for the purpose of improving storage stability, and typical examples include a basic alkali metal compound, a basic alkali earth metal compound and a basic organic compound such as amine. Further, radical·cation hybrid type curing ink can be also prepared by combining radical polymerizing monomer and an initiator.

Further, in the case of employing a cation curing compound, a water content is preferably adjusted in a range of 0.5 - 5% with respect to improving storage stability of ink.

### [Ink Viscosity]

In ink of this invention, when it is utilized in ink-jet image formation, a viscosity at 25 °C is preferably 7 - 50 mPa·s.

### [Recording Medium]

In this invention, the expression "a recording medium is not substantially provided with absorption capability of the ink" means that a weight increasing ratio of the recording medium is not more than 5 wt% when it is soaked into the ink for 10 min.

As a recording medium utilizable in this invention, various recording media can be utilized, however, it is preferably a recording medium without essentially having absorptive capability of ink, and utilized can be various types of non-absorptive plastic and film thereof applied for so called light packaging such as ordinary non-coated paper and coated paper; various plastic film includes such as polyethylene terephthalate (PET) film, stretched polystyrene film (OPS), stretched polypropylene (OPP) film, stretched nylon (ONy) film, polyvinyl chloride (PVC) film, polyethylene (PE) film and triacetyl cellulose (TAC) film. As other plastics, polycarbonate, acrylic resin, ABS, polyacetal, polyvinyl alcohol (PVA) and rubbers can be utilized. Further, metals, glasses are also applicable. Among these recording media, a constitution of this invention is effective when an image is formed on PET film, OPS film, OPP film, ONy film and PVC film, which are capable of shrinkage by heat. These substrates are liable to cause curl and deformation of film by curing shrinkage of ink or by heating at the time of a curing reaction as well as ink film hardly follows shrinkage of a substrate.

Various types of plastic films are significantly different in their surface energy from each other, resulting in change of the dot radius after ink landing depending on recording media, which has been a problem. In a constitution of this invention, an excellent high definition image can be formed on a recording medium, including OPP film and OPS film which have low surface energy, in addition to PET film which has relatively large surface energy, and having a wide range of the surface energy such as 35 - 60 mN/m.

In this invention, it is advantageous to utilize a long length (a web form) recording medium with respect to a cost of a recording medium such as packaging expense and a manufacturing cost, efficiency of print preparation, in addition to adaptability to various types of print sizes.

### [Image Forming Method]

An image forming method of this invention is preferably a method, in which the above described ink is drawn on a recording medium by means of such as flexography, gravure printing and an ink-jet recording method, followed by curing the ink by irradiation of actinic rays such as ultraviolet rays.

This invention is characterized in that a liquid drop quantity ejected from a nozzle is 1 - 10 pl per 1 dot. Essentially, to form a high definition image, a liquid drop quantity is necessarily to be in this range, however, ejection stability becomes particularly severe in the case of ejection at this liquid drop amount. According to this invention, ejection stability is improved and a high definition image can be stably formed even when ejection is performed at this quantity of a liquid drop as small as 1 - 10 pl.

Further, an image forming method of this invention is preferably provided with a temperature control means of a recording medium after ink of this invention is ejected on the recording medium. This temperature control means includes a method to arrange such as a heater under a transport table of a recording medium, or a method to blow a hot wind on the surface of a recording medium to control temperature.

In this invention, the total ink layer thickness, after ink has been drawn on a recording medium followed by being cured by irradiation of actinic rays, is preferably 2 - 20 µm. In an application to light package printing, in which a recording medium is usually comprised of a thin plastic film material, ink ejection of an excess layer thickness is undesirable because, in addition to the above-described problem of curl and wrinkle of a recording medium, a problem of change of stiffness and quality feeling of the total printed matter is caused.

Herein, "the total ink layer thickness" means the maximum value of a layer thickness of ink having been drawn on a recording medium, and the meaning of the total ink layer thickness is the same in any recording of monocolor, two-color accumulation, three-color accumulation or four-color accumulation (white ink base).

In a printing method of this invention, as a irradiation condition of actinic rays, actinic rays are preferably irradiated in 0.001 - 2.0 seconds after ink printing and more preferably in 0.001 - 1.0 second. To form a high definition image, it is important to make irradiation timing of as early as possible.

Further, also one of a preferable embodiment is a method in which irradiation of actinic rays is divided into two steps and actinic rays are irradiated firstly in 0.001 - 2.0 seconds after ink printing and actinic rays are further irradiated after finishing the whole printing. By dividing irradiation of actinic rays into two steps, it is possible to further restrain shrinkage of a recording medium which is caused at the time of ink curing.

Heretofore, in an UV ink printing method, a light source having a high illuminance such as having a total electricity consumption of over 1 kW·hr is generally utilized to restrain broadening and bleeding of a dot after ink landing. However, when such a light source is utilized, particularly in printing on such as a shrink label, it was a present stage that shrinkage of a recording medium becomes too large to make the product practically unusable.

In this invention, actinic rays having the maximum illuminance at a wavelength region of 254 nm is preferably utilized so that a high definition image can be formed as well as shrinkage of a recording medium is practically within an allowable level even when a light source having a total electric consumption of over 1 kW·hr is utilized.

In this invention, it is further preferable that a total electricity consumption of a light source to irradiate actinic rays is less than 1 kW·hr. Examples of a light source having a total electricity consumption of less than 1 kW·hr include such as a fluorescent tube, a cold cathode tube and an LED, however, is not limited thereto.

Next, an ink-jet recording apparatus (hereinafter, simply referred to as a recording apparatus) utilizable in an image forming method of this invention will be explained.

In the following, a recording apparatus of this invention will be explained with reference to drawings. Herein, a recording apparatus of the drawings is only one embodiment of a recording apparatus of this invention and a recording apparatus of this invention is not limited to these drawings.

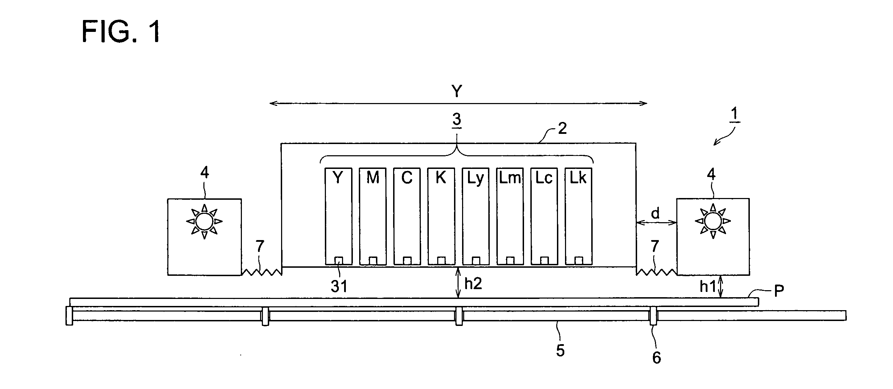

Fig. 1 is a front view drawing to show a primary constitution of a recording apparatus of this invention. Apparatus 1 is constituted by being equipped with such as head carriage 2, recording head 3, irradiation means 4 and platen portion 5. In this recording apparatus 1, platen portion 5 is arranged under recording material P. Platen portion 5 is provided with a function to absorb ultraviolet rays so as to absorb excess ultraviolet rays having been passed through recording material P. As a result, a high definition image can be very stably reproduced.

Recording material P is guided by guide member 6 to be shifted from the front side toward the interior in Fig. 1 by work of a transport means (not shown in the drawing). Head scanning means (not shown in the drawing) performs scanning of recording head 3 held by head carriage 2, by shifting head carriage 2 back and forth along the Y direction of Fig. 1.

Head carriage 2 is arranged above recording material P and stores a plural number of recording head 3, which will be described later, corresponding to a number of colors utilized for image printing on recording material P, so as to direct the ejection outlet downward. Head carriage 2 is arranged against the main body of recording apparatus 1 in a form of being freely shiftable go and back along the Y direction in Fig. 1, and is shifted along the Y direction of Fig. 1 by drive of a head scanning means.

Herein, in Fig. 1, head carriage 2 is shown so as to store recording head 3 containing yellow (Y), magenta (M), cyan (C), black (K), light yellow (Ly), light magenta (Lm), light cyan (Lc) and light black (Lk), however, the color number stored in head carriage 2 is appropriately determined in a practical application.

Recording head 3 ejects actinic ray curable ink (such as UV curable ink), which is supplied from an ink supply means (not shown in the drawing), toward recording material P through an ejection outlet by work of a plural number of ejection means (not shown in the drawing) which are provided in the interior of recording head 3. UV ink ejected by recording head 3 is comprised of such as a colorant, a polymerizing monomer and an initiator and has capability of being cured by a cross-linking and polymerization reaction of the monomer accompanied by a catalyst action of an initiator as a result of irradiation of UV rays.

Recording head 3 eject UV ink as ink drops against a predetermined area (an area on which ink is capable of landing) of recording material P during scanning to shift the recording head from one end of recording material P to the other end along the Y direction of Fig. 1 by drive of a head scanning means, whereby ink drops are landed on said area capable of being landed.

After performing appropriate times of the above-described scanning to eject UV ink toward one area capable of being landed, recording material P is appropriately transferred from the front side toward the interior direction of Fig. 1 by a transfer means, and UV ink is ejected against the next area capable of being landed, adjacent along the interior of Fig. 1 while performing scanning again by a head scanning means.

By repeating the above-described operation, coupled with a head scanning means and a transport means, to eject UV ink from recording head 3, which is an image comprising an aggregate of UV ink drops is formed on recording material P.

Irradiation means 4 is constituted of an ultraviolet lamp which irradiates ultraviolet rays of a specific wavelength range at stable exposure energy, and a filter which transfer ultraviolet rays having specific wavelengths. Herein, as an ultraviolet lamp, such as a mercury lamp, a metal halide lamp, an excimer laser, an ultraviolet laser, a cold cathode tube, a black light and an LED (light emitting diode) are applicable, and a metal halide lamp, a cold cathode tube and a mercury lamp or a black light, which have a band form, are preferable. In particular, a low pressure mercury lamp, a cold cathode tube, a hot cathode tube and a sterilizing lamp, which emit ultraviolet rays having a wavelength of 254 nm, are preferable because prevention of bleeding and control of the dot radius are efficiently performed. By utilizing a black light as a radiation source of irradiation means 4, irradiation means 4 to cure UV ink can be prepared at a low cost.

Irradiation means 4 is provided with the same form as the maximum one which can be set in recording apparatus 1 or a form not smaller than the area capable of being landed, within an area capable of being landed in which recording head 3 ejects UV ink in one time scanning by drive of a head scanning means.

Irradiation means 4 are arranged on the both sides of head carriage 2 by being fixed approximately parallel to recording material P.

As described before, as a means to adjust illuminance at the ink ejection portion, in addition that the whole recording head 3 is naturally light shielded, it is effective to make distance h2 between ink ejection portion 31 of recording head 3 and recording material P larger than distance h1 between irradiation means 4 and recording material P (h1 < h2) or to make distance d between recording head 3 and irradiation means 4 distant (make d large). Further, it is more preferable to make the space between recording head 3 and irradiation means 4 to be constituted of bellows structure 7.

Herein, wavelength of ultraviolet rays irradiated by irradiation means 4 can be appropriately changed by converting an ultraviolet lamp or a filter arranged in irradiation means 4.

Ink of this invention is very excellent in ejection stability and is particularly effective in the case of forming an image by use of a recording apparatus of a line head type.

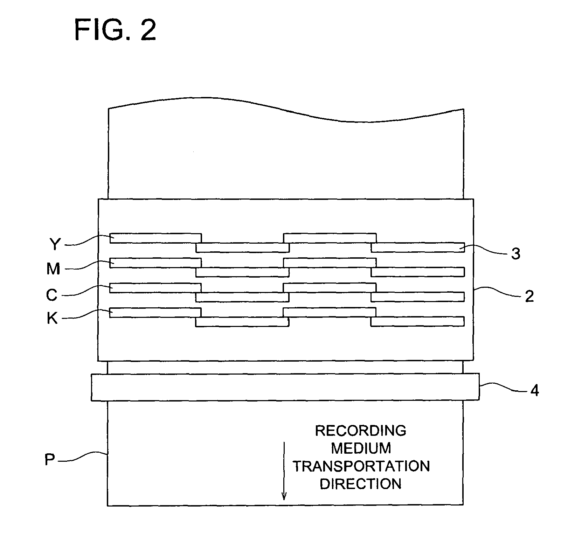

Fig. 2 is an over view drawing to show another example of a primary constitution of a recording apparatus.

An ink-jet recording apparatus shown in Fig. 2 is called as a line head type and a plural number of recording heads 3 of each color are arranged by being fixed in head carriage 2 so as to cover the whole width of recording material P.

On the other hand, on the downstream of head carriage 2, irradiation means 4 is arranged so as to similarly cover the whole width of recording material P.

In a line head type, head carriage 2 and irradiation means 4 are fixed and only recording material P is transported and ejection and curing of ink are performed to form an image.

### EXAMPLES

In the following, this invention will be specifically explained with reference to examples, however, is not limited thereto. Herein, "part(s)" or "%" in examples represents "weight part(s)" or "weight%", unless otherwise mentioned.

### Example 1

### <Preparation of Dispersion>

### [Preparation of Dispersion A]

The following each compound was charged in a stainless beaker and dissolved with stirring for 1 hour while being heated on a hot plate of 65 °C.

| | |
|---|---|
| PB 822 (a dispersant manufactured by Ajinomoto Finetechno Corp.) | 8 parts |
| Tetaethylene glycol diacrylate (bifunctinal) | 72 parts |

The solution, after having been cooled to room temperature, was added with 20 parts of Pigment Black 7 (#52, manufactured by Mitsubishi Chemicals Co., Ltd.), which was charged in a glass bottle together with 200 g of zirconia beads having a diameter of 0.3 mm to be sealed, followed by being subjected to dispersion by a paint shaker for 4 hours, and zirconia beads were removed to prepare dispersion A.

### [Preparation of Dispersion B - D]

Dispersion B, dispersion C and dispersion D were prepared in a similar manner to preparation of the above-described dispersion A, except that Pigment Blue 15:4 (Cyanine Blue 4044 manufactured by Sanyo Color Works, Ltd.), Pigment Red 122 (CFR 321 manufactured by Nippon Fine Chemical Co., Ltd.) and Pigment Yellow 180 (CFY 313-2 manufactured by Nippon Fine Chemical Co., Ltd.) were utilized instead of Pigment Black 7, respectively.

### [Preparation of Dispersion E]

Each compound described below was charged in a stainless beaker and dissolved with stirring while being heated on a hot plate of 65 °C for 1 hour.

| | |
|---|---|
| PB 821 (dispersant manufactured by Ajinomoto Fine Techno Co., Ltd.) | 9 parts |
| OXT 211 (oxetane compound manufactured by Toa Gosei Co., Ltd.) | 71 parts |

The resulting solution, after having been cooled to room temperature, being added with 20 parts of Pigment Black 7 (# 52 manufactured by Mitsubishi Chemicals Corp.), was charged in a glass bottle together with 200 g of zirconia beads having a diameter of 0.3 mm to be closed, and zirconia beads were removed after having been subjected to a dispersion treatment of 4 hours, whereby dispersion E was prepared.

### [Preparation of Dispersion F - H]

Dispersion F, dispersion G and dispersion H were prepared in a similar manner to preparation of the above-described dispersion E, except that Pigment Blue 15:4 (Cyanine Blue 4044 manufactured by Sanyo Color Works, Ltd.), Pigment Red 122 (CFR 321 manufactured by Nippon Fine Chemical Co., Ltd.) and Pigment Yellow 180 (CFY 313-2 manufactured by Nippon Fine Chemical Co., Ltd.) were utilized instead of Pigment Black 7, respectively.

### <Preparation of Ink>

### [Preparation of Ink 1K - 12K]

Ink 1K - 12K comprising compositions described in Table 3 were prepared by utilizing dispersion A prepared above. Herein, values described in Table 3 represent weight parts.

Further, details of compounds described in Table 3 by abbreviations are as follows.

### <Solvent>

CH: cyclohexane (flash point: 42.3 °C)
DEGEE: diethylene glycol diethyl ether (flash point: 82 °C)

### <Polymerizing Compound>

RA: lauryl acrylate
TEGDA: tetraethylene glycol diacrylate
DPEHA: caprolactam modified dipentaerythritol hexaacrylate
A-400: NK ester (manufactured by Shin-Nakamura Chemical Co., Ltd.)

### <Modified Silicone Oil>

SDX-1843: manufactured by ADEKA Corp.

### <Photo-induced Radical Initiator>

I-184: Irgacure 184, manufactured by Ciba Specialty Chemicals
I-907: Irgacure 184, manufactured by Ciba Specialty Chemicals

**Table 3**

| Ink No. | | 1K | 2K | 3K | 4K | 5K | 6K | 7K | 8K | 9K | 10K | 11K | 12K |
|---|---|---|---|---|---|---|---|---|---|---|---|---|---|
| Dispersion | Dispersion A | 14.0 | 14.0 | 14.0 | 14.0 | 14.0 | 14.0 | 14.0 | 14.0 | 14.0 | 14.0 | 14.0 | 14.0 |
| Solvent | CH | 15.0 | 30.0 | 80.0 | 85.0 | 60.0 | 70.0 | - | - | - | - | - | - |
| | DEGEE | - | - | - | - | - | - | 15.0 | 30.0 | 80.0 | 85.0 | 60.0 | 70.0 |
| Polymerizing compound | RA | 5.0 | - | - | - | - | - | 5.0 | - | - | - | - | - |
| | TEGDA | 38.9 | 33.9 | 3.9 | 3.9 | 13.9 | 8.9 | 38.9 | 33.9 | 3.9 | 3.9 | 13.9 | 8.9 |
| | DPEHA | 35.0 | 30.0 | 10.0 | 5.0 | 5.0 | - | 35.0 | 30.0 | 10.0 | 5.0 | 5.0 | - |
| | A-400 | - | - | - | - | 15.0 | 15.0 | - | - | - | - | 15.0 | 15.0 |
| *A | SDX-1843 | 0.1 | 0.1 | 0.1 | 0.1 | 0.1 | 0.1 | 0.1 | 0.1 | 0.1 | 0.1 | 0.1 | 0.1 |
| Photoinduced radical initiator | I-184 | 3.0 | 3.0 | 3.0 | 3.0 | 3.0 | 3.0 | 3.0 | 3.0 | 3.0 | 3.0 | 3.0 | 3.0 |
| | I-907 | 3.0 | 3.0 | 3.0 | 3.0 | 3.0 | 3.0 | 3.0 | 3.0 | 3.0 | 3.0 | 3.0 | 3.0 |
| Remarks | | Comp. | Comp. | Comp. | Comp. | Comp. | Comp. | Comp. | Inv. | Inv. | Inv. | Inv. | Inv. |

| | | | | | | | | | | | | | |
|---|---|---|---|---|---|---|---|---|---|---|---|---|---|
| *A: Modified silicone oil, Comp.: Comparison, Inv.: Invention | | | | | | | | | | | | | |

### [Preparation of Ink 1C - 12C]

Ink 1C - 12C were prepared in a similar manner to preparation of above-described ink 1K - 12K, except that dispersion B was utilized instead of dispersion A in compositions described in Table 3.

### [Preparation of Ink 1M - 12M]

Ink 1M - 12M were prepared in a similar manner to preparation of above-described ink 1K - 12K, except that dispersion C was utilized instead of dispersion A in compositions described in Table 3.

### [Preparation of Ink 1Y - 12Y]

Ink 1Y - 12Y were prepared in a similar manner to preparation of above-described ink 1K - 12K, except that dispersion D was utilized instead of dispersion A in compositions described in Table 3.

### [Preparation of Ink 21K - 32K]

Ink 21K - 32K comprising compositions described in Table 4 were prepared by utilizing dispersion A. Herein, values described in Table 4 represent weight parts.

Further, the details of compounds described by abbreviations in Table 4 are as follows.

### <Solvent>

CH: cyclohexane (flash point: 42.3 °C)
DEGEE: diethylene glycol diethyl ether (flash point: 82 °C)

### <Polymerizing Compound>

UVR-6110: manufactured by Dow Chemical Co.
OXT 221: oxetane compound, manufactured by TOAGOSEI Co., Ltd.
OXT 212: oxetane compound, manufactured by TOAGOSEI Co., Ltd.

### <Basic Compound>

*1: triisopropanol amine

### <Photo-induced Radical Initiator>

UV 16992: manufactured by Dow Chemical Co.

**Table 4**

| Ink No. | | 21K | 22K | 23K | 24K | 25K | 26K | 27K | 28K | 29K | 30K | 31K | 32K |
|---|---|---|---|---|---|---|---|---|---|---|---|---|---|
| Dispersion | Dispersion E | 14.0 | 14.0 | 14.0 | 14.0 | 14.0 | 14.0 | 14.0 | 14.0 | 14.0 | 14.0 | 14.0 | 14.0 |
| Solvent | CH | 15.0 | 30.0 | 80.0 | 85.0 | 60.0 | 70.0 | - | - | - | - | - | - |
| | DEGEE | - | - | - | - | - | - | 15.0 | 30.0 | 80.0 | 85.0 | 60.0 | 70.0 |
| Polymerizing compound | UVR-6110 | 20.0 | 20.0 | 10.0 | 5.0 | 15.0 | 10.0 | 20.0 | 20.0 | 10.0 | 5.0 | 15.0 | 10.0 |
| | OXT221 | 56.9 | 44.9 | 4.9 | 6.9 | 19.9 | 14.9 | 56.9 | 44.9 | 4.9 | 6.9 | 19.9 | 14.9 |
| | OXT212 | 5.0 | 2.0 | 2.0 | - | 2.0 | 2.0 | 5.0 | 2.0 | 2.0 | - | 2.0 | 2.0 |
| Basic compound | *1 | 0.1 | 0.1 | 0.1 | 0.1 | 0.1 | 0.1 | 0.1 | 0.1 | 0.1 | 0.1 | 0.1 | 0.1 |
| Photoinduced acid generator | UVI- 16992 | 3.0 | 3.0 | 3.0 | 3.0 | 3.0 | 3.0 | 3.0 | 3.0 | 3.0 | 3.0 | 3.0 | 3.0 |
| Remarks | | Comp. | Comp. | Comp. | Comp. | Comp. | Comp. | Comp. | Inv. | Inv. | Inv. | Inv. | Inv. |

| | | | | | | | | | | | | | |
|---|---|---|---|---|---|---|---|---|---|---|---|---|---|
| *1: Triisopropanol amine, Comp.: Comparison, Inv.: Invention | | | | | | | | | | | | | |

### [Preparation of Ink 21C - 32C]

Ink 21C - 32C were prepared in a similar manner to preparation of above-described ink 21K - 32K, except that dispersion F was utilized instead of dispersion E in compositions described in Table 4.

### [Preparation of Ink 21M - 32M]

Ink 21M - 32M were prepared in a similar manner to preparation of above-described ink 21K - 32K, except that dispersion G was utilized instead of dispersion E in compositions described in Table 4.

### [Preparation of Ink 21Y - 32Y]

Ink 21Y - 32Y were prepared in a similar manner to preparation of above-described ink 21K - 32K, except that dispersion H was utilized instead of dispersion E in compositions described in Table 4.

### <Preparation of Ink Set>

### [Preparation of Ink Set 1]

Ink 1K, ink 1C, ink 1M and ink 1Y were combined to make ink set 1.

### [Preparation of Ink Set 2 - 12]

Ink 2K - 12K, ink 2C - 12C, ink 2M - 12M and ink 2Y - 12Y were combined to make ink set 2 - 12.

### [Preparation of Ink Set 21]

Ink 21K, ink 21C, ink 21M and ink 21Y were combined to make ink set 21.

### [Preparation of Ink Set 22 - 32]

Ink 22K - 32K, ink 22C - 32C, ink 22M - 32M and ink 22Y - 32Y were combined to make ink set 22 - 32.

### <Ink-jet Image Forming Method>

Each ink set prepared above was mounted on an ink-jet recording apparatus described in Fig.1, which is equipped with a piezo-type ink-jet nozzle, and image recording was continuously performed on a recording medium (long length polyethylene terephthalate film having a width of 600 mm and a length of 500 m) under the following condition. The ink supply system is constituted of an ink tank, a supply pipe, a pre-room ink tank immediately before a head, piping equipped with a filter and a piezo-head, and the portion from the pre-room tank to the head was heat insulated and heated at 50 °C. The piezo-head was driven so as to eject multi-size dots of 2 - 15 pl at a resolution of 720 x 720 dpi and each ink was continuously ejected to form a solid image of each color. Herein, a transport guide plate (a platen portion) was heated at 40 °C so as to keep ink at approximately 40 °C also after landing on a recording medium. Ink was instantly (less than 1 second after landing) cured by lamp units (in which following light source A was mounted) shown at the both sides of a carriage after landing on a recording medium.

Light source A: high pressure mercury lamp VZero 085 (produced by Integration Technology Corp., 3kW)

### <Evaluation of Formed Image>

### [Evaluation of Curing Capability]

The surface of each formed solid image was scratched with nails to visually judge whether the film is peeled off or not and an average value of each color image, which was made to be a measure of curing, was determined according to the following criteria.
A: No peeling off is observed when being strongly scratched with nails.
B: Peeling off is observed when being strongly scratched with nails, however, which is practically allowable.
C: Easy peeling off is observed when being scratched with nails.

### (Evaluation of Smoothness (Roughness Feeling) of Image)

A black image was formed by accumulating yellow ink, magenta ink and cyan ink, and roughness feeling of the image portion and the non-image portion thereof was visually observed, whereby image smoothness was evaluated according to the following criteria.
A: Roughness feeling is not observed, or negligible.
B: Slight roughness feeling is observed.
C: Roughness is noticed.
D: Significant roughness is observed.

### (Evaluation of Ejection Stability)

After storing each ink which constitutes each ink set prepared above in a glass vessel, the vessel was covered up to be subjected to an accelerated aging test of 1 week in a thermostat at approximately 70 °C in a closed state.

Next, with respect to each ink set having been subjected to the above-described accelerated aging test, after continuous ejection for 30 minutes had been performed from a recording head of an ink-jet printer produced by Xaar Corp. under an environment of 23 °C and 55% RH, the ejection state of each ink through each nozzle of the recording head was visually observed to determine the average state, whereby ejection stability was evaluated based on the following criteria.
A: No nozzle lacks are generated even with 30 minutes continuous ejection.
B: No nozzle lacks are generated even with 30 minutes continuous ejection; however, slight satellites are generated.
C: Slight nozzle lacks and weak satellites are generated with 30 minutes continuous ejection.
D: Nozzle lacks and satellites are vigorously generated and sTable ejection is impossible.

Each evaluation results obtained above are shown in Table 5.

**Table 5**

| Ink set No. | Evaluation results | | | Remarks |
|---|---|---|---|---|
| | Curing capability | Image smoothness | Ejection stability | |
| 1 | A | C | C | Comparison |
| 2 | B | B | C | Comparison |
| 3 | B | A | C | Comparison |
| 4 | B | A | C | Comparison |
| 5 | B | B | C | Comparison |
| 6 | B | A | C | Comparison |
| 7 | A | C | B | Comparison |
| 8 | A | B | B | Invention |
| 9 | B | A | B | Invention |
| 10 | B | A | B | Invention |
| 11 | B | B | B | Invention |
| 12 | B | A | B | Invention |
| 21 | A | C | C | Comparison |
| 22 | B | B | C | Comparison |
| 23 | B | A | C | Comparison |
| 24 | B | A | C | Comparison |
| 25 | B | B | C | Comparison |
| 26 | B | A | C | Comparison |
| 27 | A | C | B | Comparison |
| 28 | A | B | B | Invention |
| 29 | B | A | B | Invention |
| 30 | B | A | B | Invention |
| 31 | B | B | B | Invention |
| 32 | B | A | B | Invention |

It is clear from the results described in Table 5 that ink set constituted of ink of this invention, which contains not less than 20 weight% of a solvent having a flash point of not lower than 70 °C together with a radiation curable compound, is excellent in image smoothness and superior in ejection stability even after an accelerated aging test without deteriorating curing capability of a formed image, compared to comparative examples.

### Example 2

Similar evaluation was performed with respect to example 2, in which diethylene glycol was changed to each solvent described in Table 1 and γ-butyrolactone and 3,5,5-trimethyl-2-cyclohexene-l-one in preparation of ink set 8 - 12 and 28 - 32 described in example 1, to confirm that example 2 is excellent in image smoothness and superior in ejection stability even after an accelerated aging test without deteriorating curing capability of a formed image, compared to comparative examples described in example 1. Herein, among them, solvents having a boiling point of 180 - 250 °C exhibited more excellent results.

## Claims

1. An ink comprising:
(i) a radiation curable compound; and
(ii) a solvent having a flash point of not lower than 70 °C in an amount of 20 weight% based on the total weight of the ink.

2. The ink of claim 1, wherein the solvent having a flash point of not lower than 70 °C has a boiling point of not lower than 180 °C.

3. The ink of claim 1 or 2, wherein the solvent having a flash point of not lower than 70 °C has a boiling point of not higher than 250 °C.

4. The ink of any one of claims 1 - 3, wherein a photopolymerization initiator is incorporated.

5. The ink of any one of claims 1 - 4, wherein a content of the solvent having a flash point of not lower than 70 °C is not less than 50 weight% and not more than 90 weight% based on the total weight of the ink.

6. The ink of any one of claims 1 - 5, wherein the radiation curable compound contains an oligomer or a prepolymer.

7. The ink of claim 6, wherein a ratio of oligomer or prepolymer in the radiation curable compound is not less than 30 weight% based on the total weight of the ink.

8. The ink of any one of claims 1 - 7, wherein a colorant is incorporated.

9. A method for image forming of ink-jet recording comprising the step of:
(a) ejecting an ink of any one of claims 1 - 8 onto a recording medium,
wherein the minimum liquid drop size at the time of ejection of the ink is not less than 1 pl and not more than 10 pl per 1 dot.

10. The method for image forming of ink-jet recording comprising the step of:
(a) ejecting the ink of any one of claims 1 - 8 onto the recording medium, wherein a temperature control means of the recording medium, having been ink-jet recorded, is provided after printing.

11. The method for image forming of claim 9 or 10, wherein the recording medium does not substantially exhibit absorption capability of the ink.
